# EUROPEAN PATENT SPECIFICATION

(11) **EP 4 074 225 B1**
(45) Date of publication and mention of the grant of the patent: **22.11.2023**
(21) Application number: 22170404.2
(22) Date of filing: 22.02.2019
(51) Int. Cl.: A47G 29/14, G06Q 10/08, H04W 4/80

(54) **PARCEL LOCKER AND A METHOD FOR OPERATING THE PARCEL LOCKER**
PAKETFACH UND VERFAHREN ZUM BETREIBEN VON PAKETFÄCHERN
CASIER POUR COLIS ET PROCÉDÉ DE FONCTIONNEMENT DU CASIER POUR COLIS

(30) Priority: 23.02.2018 DK PA201870121
(43) Date of publication of application: 19.10.2022
(62) Divisional of application: 19757924.6
(73) Proprietor: SwipBox Development ApS, 6400 Sønderborg (DK)
(72) Inventor: Kaczmarek, Allan, 6400 Sønderborg (DK); Erler, Klaus Okkels, 6470 Sydals (DK)
(74) Representative: Patrade A/S

(56) References cited:
- EP-B1- 1 211 971
- ES-T3- 2 640 114
- US-A1- 2015 356 801
- US-A1- 2017 251 856

## Description

### Field of the Invention

The invention relates to a parcel locker, and a foundation thereof.

### Background of the Invention

The distribution and allocation of parcels typically involves multiple partners in the process from the time the consignor or consignee/receiver of the parcel orders a parcel delivery until the consignee receives the parcel. The involved partners may include multiple couriers, postal or logistics providers. In addition; the process may include multiple acts of handling the parcel. This may include acts of transporting, receiving, delivering or handing out the parcel, and storing the parcel.

In general, the distribution and allocation of parcels is continuously being optimized to include lower storage time and less manual handling.

Especially the distribution and allocation of parcels on an ad hoc basis, where the consignor and consignee do not have regular or large shipments, e.g. weekly or daily delivery of large shipments from company to company, is generally changing to include an assigned pick-up place or service point, where the consignee can pick up the parcel within a given time interval.

The number of serviced postal offices for handing out parcels is decreasing and the serviced postal offices are being replaced by self-service parcel lockers. The self-service parcel lockers may have a lower storage capacity than the postal offices but may be distributed more broadly to generate more delivery and/or pick-up places.

Today, parcel lockers typically communicate directly with a server using systems for mobile telecommunication, such as GSM, UTMS or comparable systems. The systems may use WLAN, wireless access points or hard-wired connections to the internet. Furthermore, the parcel lockers today typically comprise a display and an input unit, which may be a key pad, a scanner or a touch screen to display information and/or guide the user of the delivery or pick-up event, which often includes entering a code for the parcel delivery or parcel pick-up event.

The operation of the parcel lockers is dependent on a continuous and stable operated mobile telecommunication system and/or internet connection, and thus, the location of the parcel lockers should be chosen accordingly.

Furthermore, the parcel lockers are typically installed with a hard wired power connection to provide sufficient power to the operation of the parcel locker, to power the display and/or the input units, as well as the data communication. This further incites the user to choose the location of the parcel lockers accordingly. Furthermore, as the parcel lockers are typically electronically operated, a continuous and stable power supply is required.

This may present obstacles in regard to achieving an even and fine distribution mesh of parcel lockers, where the parcel lockers can be placed as freely as possible in any location and in a fast yet reliable manner, even though there may exist unstable infra structure with poor mobile telecommunication systems, internet connections and/or unstable power supply.

US20150356801 describes a smart system locker and a method of controlling a securable device in a set of securable devices, which method may include establishing a centralized data repository with data representative of the status of each securable device. The smart system locker is however not suitable for fast deployment.

### Object of the Invention

It is an objective to overcome one or more of the before mentioned shortcomings of the prior art.

### Description of the Invention

A not claimed method for operating a door having a mechanical lock of a parcel locker compartment, comprised in a parcel locker having a service point ID. The method comprises the acts of transmitting beacon signals, comprising the service point ID and receiving a user electronic token tagged with a matching service point ID, comprising a piece ID and instruction of a user event. The method further comprises the acts of creating a parcel locker command for the received instructions and transmitting a parcel locker command signal for the parcel locker command for operating a lock. A method wherein the user electronic token is received using a communication standard of a wireless personal area network.

The method may comprise further acts of generating a sequence number for the instruction of the user event, generating a synchronisation electronic token, comprising the sequence number and the piece ID, transmitting the synchronisation electronic token and receiving an acknowledgment electronic token.

In the following, electronic token may be referred to as e-token.

In one aspect, the service point ID may be a global unique identifier (GUID) of a parcel locker to be used for delivery location and/or pick-up location of a parcel.

In one aspect, the piece ID may refer to a specific parcel and may be a GUID to be used for tracking and/or identifying the parcel.

The method may constitute a part of a method for a distributed architecture for allocation of parcels, adapted to a system wherein the parcels are allocated by couriers from a parcel consignor to a parcel locker, from a parcel locker to a parcel consignee and/or from one parcel locker to another parcel locker.

A parcel pick-up refers to a user event, where the parcel is to be picked up by the holder of the user e-token from a parcel locker.

A parcel delivery refers to a user event, where the parcel is to be delivered by the holder of the user e-token at a parcel locker.

Here, a door is considered a panel that makes an opening in a building, room or vehicle, i.e. the parcel locker. The door may be made of a hard, impermeable, and hard-to-break substance. The door is attached to a frame, such that the door is moveable in respect to the frame. Doors make ingress into or egress from a building, room, or vehicle, i.e. the parcel locker, easier to manage. The door may be moved in various ways to allow or prevent ingress or egress. The door may be moved at angles away from the frame, by sliding on a plane parallel to the frame, by folding in angles on a parallel plane, or by spinning along an axis at the centre of the frame. Here the general purpose of the door is to provide access into and out of a space and preventing unwanted access from outsiders.

The door may have any size. The size may be a size generally referred to as port or gate sizes, typically measured in metres and/or decimetres, and down to sizes generally referred to as cabinet or locker door sizes, typically measured in decimetres and/or centimetres.

One effect of this embodiment is that the user e-token may comprise all the information and instructions regarding the parcel. Thus, only a single holder of the data and a single communication connection is required between the parcel locker and the holder of the user e-token. The holder of the user e-token may be a consignor of a parcel, a consignee, a courier or maintenance professional. This is not an exhaustive list and may only serve as examples.

Instruction of a user event refers to the instruction to be performed by the holder of the user e-token. This may be delivery of a parcel, pick-up of a parcel or other events which may be relevant.

The parcel locker command may be a command for operating the door of a specific parcel locker compartment, using a parcel locker command signal. The parcel locker command signal may be an electrical signal, which is transmitted to the lock for locking or unlocking the door of the specific parcel locker compartment.

The lock may comprise electrical means, which unlocks when an electrical signal is received. The compartment door may comprise compressible mechanical means, which opens the compartment door, once the lock is unlocked. The lock may comprise mechanical locking means which locks when the compartment door is physically pushed from an open position to a close position.

One effect may be that the parcel locker commands may all concern unlocking the lock of a parcel locker door, and thus, the signal type of the parcel locker command signal may be identical for all parcel locker commands. The only divergence may be to which parcel locker compartment the signal may be transmitted. This may be advantageous in regard to production, operation and maintenance of the parcel locker.

A further effect of the method may be that - due to the character of the parcel locker, being a location for delivery or pick-up of a physical parcel - the holder of the user e-token is physically present at the location of the parcel locker for parcel delivery or pick-up to transfer the user e-token. Therefore, only a limited communication range may be required.

Furthermore, due to the character of the user e-token only a limited dataset is transferred.

This may lead to the use of a low band data communication standard and/or a data communication standard with low power consumption. For wireless personal area networks (WPAN), especially two kinds of wireless technologies are used today: Bluetooth and near field communication (NFC). A key concept in WPAN technology is the concept of plugging in, which may ensure that when any two WPAN-equipped devices come into close proximity (within several meters of each other), they may communicate as if connected by a cable. Another important feature is the ability of each device to lock out other devices selectively, preventing unnecessary interference or unauthorized access to information.

Especially the Bluetooth standard may transfer data relatively fast with low power consumption. In addition, the quiescent current is very low. Furthermore, a Bluetooth communication unit is a very common unit in mobile smart devices, where the unit may have a communication range from a few meters and beyond. Other communication standards for WPAN with the same characteristics of low power consumption and a limited communication range may be used. Furthermore, the communication standard may generally be widely used and implemented in mobile smart devices. This has the advantage of easy access to implementation and use of the method.

Thus, one effect of the transmitted beacon signal comprising the service point ID may be that a holder of a user e-token tagged with a matching service point ID may establish a WPAN communication with the parcel locker. This may be advantageous in regard to ensuring selective communication only with a parcel locker with an identical service point ID to prevent unnecessary interference or unauthorized access to information.

Yet a further effect of the method may be that the communication is performed without accessing the content of the user e-token, which may be advantageous both in regard to the robustness of the parcel allocation system and the mobile smart device.

A robust system may refer to a system with a high security against hacking. A robust system may also refer to a system with a high level of redundancy.

A further effect of this embodiment, if used in a method for distributed architecture for allocation of parcels, may be that the parcel locker only needs to communicate with the holder of the user e-token at the actual location of the parcel locker or in close vicinity hereof. This may, as previously described, be advantageous in regard to a low band and short range communication connection between the parcel locker and the holder of the user e-token, and thus, may eliminate the need for any internet and or mobile communication coverage at the location of the parcel locker. Furthermore, using low power consumption communication standard(s) may be advantageous in regard to a low power consumption of the parcel locker. In one aspect, the user e-token may be transferred from one holder to another. Hereby, it may be achieved that the first receiver of the user e-token may transfer the user e-token to a trusted person to perform the actual collection or delivery of the parcel instead of the recipient himself.

The user e-token may be encrypted with a service point encryption key associated with the parcel locker, configured with the comprised service point ID.

An effect of this further embodiment may be that the encryption key is not transmitted to and/or from the parcel locker with the advantage of mitigating any risk of hacking the parcel locker or the user e-tokens. A further advantage is that in case one encryption key may be decoded only a single parcel locker may be affected.

In an exemplary embodiment, the method comprising further acts of generating a sequence number for the instruction of the user event, generating a synchronisation e-token comprising the sequence number and the piece ID, and transmitting the synchronisation e-token.

The synchronisation e-token may be generated in response to a received user e-token.

An effect of this further embodiment may be that the status of the parcel locker may be updated by use of these synchronisation e-tokens. This could be advantageous in regard to the use in a distributed architecture for allocation of parcels, where the status of multiple parcel lockers may be updated using the synchronisation e-tokens. This status could be performed on a server.

Equivalent to the communication of the user e-token, the communication of the synchronisation e-token may be transmitted to a single receiver of the data using a single communication connection between the parcel locker and the receiver of the data.

The synchronisation e-token may not be tagged with a service point ID, and may therefore be transmitted from the parcel locker using an already established WPAN connection. The established WPAN connection may, as previously described, be established to a holder of a user e-token tagged with a service point ID matching the service point ID of the parcel locker. However, the user e-token may be a different user e-token than the user e-token to which the synchronisation e-token is a response to. Hence, a synchronisation e-token may only be transmitted to a holder of any user e-token, which have gained WPAN access to the parcel locker.

One advantage of this embodiment is that the method may provide for transmitting the synchronisation e-token immediately, using the established WPAN connection by the user e-token to which the synchronisation e-token is a reply, or it may be transmitted using a later established WPAN connection. Hence, the method entails resending the synchronisation e-tokens. Furthermore, the method entails piggybacking of the synchronisation e-token from the parcel locker to for example a server, where the status of one or more parcel lockers may be monitored and updated. This could be advantageous for the use of the parcel locker in a distributed network of multiple parcel lockers.

In one aspect, the performed parcel locker instructions may be numbered with sequentially numbered sequence numbers. Alternatively, the sequence numbers may be generated as sequential numbers for a single piece ID. Hence, the sequence number may be a local identifier for the parcel locker or for each piece ID.

In a further aspect, the transmitted synchronisation e-tokens may comprise a row of consecutive events and the associated numbers for the associated parcel locker.

This may be advantageous in regard to ensuring that the status of the parcel locker may be updated with any performed parcel locker instruction. By numbering the performed parcel locker instructions either connected to each piece ID or to the individual parcel locker it may be ensured that all performed instructions are actually received by the server.

The use of piggybacking may result in that a synchronisation e-token to be communicated to for example a server, may not reach the server at all, or may reach the server long after the parcel locker instruction has been performed. By enclosing the sequence numbers and piece IDs in one or more synchronisation e-tokens the later generated synchronisation e-tokens to be received by the server may compensate for a lost or late-received synchronisation e-token.

In an example, the method comprising a further act of receiving an acknowledgment e-token.

The acknowledgment e-token may be received in response to a transmitted synchronisation e-token, thereby establishing a handshake confirming that the synchronisation e-token has been received by the recipient.

Equivalent to the communication of the user e-token and the synchronisation e-token, the communication of the acknowledgment e-token may be received from a single holder of the data, using a single communication connection between the parcel locker and the transmitter of the data.

The acknowledgment e-token may not be tagged with a service point ID, and may therefore be transmitted to the parcel locker using an already established WPAN connection. The established WPAN connection may, as previously described, be established to a holder of a user e-token tagged with a service point ID matching the service point ID of the parcel locker. However, the user e-token may be a different user e-token than that, to which the synchronisation e-token and the acknowledgment e-token is a response and a handshake, respectively. Hence, an acknowledgement e-token may only be received from a holder of any user e-token, which has gained WPAN access to the parcel locker.

One advantage of this embodiment is that the method may provide for transmitting the acknowledgement e-token to holders of subsequent user e-tokens for accessing the same parcel locker. Hence, the method entails resending the acknowledgement e-token. Furthermore, the method entails piggybacking of the acknowledgement e-token from for example a server to the parcel locker as a handshake from the server that the synchronisation e-token has been received. This could be advantageous for the use of the parcel lockers in a distributed network of multiple parcel lockers.

The use of piggybacking may result in that an acknowledgement e-token to be communicated from for example a server, may not reach the parcel locker at all, or may reach the parcel locker long after the parcel locker instruction has been performed. Therefore, sending an acknowledgement e-token may be relevant in regard to achieving a robust system with a high level of redundancy.

An effect of the method may be that the holder of the e-tokens may not access the content of the e-tokens, which may be advantageous both in regard to the robustness of the system and of the holder of the e-tokens. A robust system may refer to a system with a high security against hacking. A robust system may also refer to a system with a high level of redundancy.

Each user e-token may be held by a single holder. The user e-token belongs to a single user, but the user e-token can be available on multiple devices e.g. in one case the user e-token can be available on multiple devices as long as the single user is logged in with his username and password on all the devices. Once the user e-token has been transmitted to the service point, no copies of the user e-token may be available.

For each user e- token, multiple synchronisation e- tokens and/or acknowledgement e-tokens may be held by one or more holders in a distributed network.

The method may be referred to that the user e-token is piggybacked between the server and the parcel locker in a point-to-point connection using a preferred path, whereas the synchronisation and acknowledgement e-tokens may be piggybacked between the server and the parcel locker in a point-to-point connection using distributed paths laid out by the distributed network of holders.

The piggybacking of the synchronisation and acknowledgement tokens may be comparable to `Round Robin'-distribution versus `preferred path'-distribution of the user electronic tokens, however without using a determined order, but instead using a 'preferred path' for the user e-token and one or more `arbitrary paths' for the synchronisation and acknowledgement tokens.

In one aspect, the server may store a copy of the user e-token until the handshake for the received synchronisation e-token is performed.

In one embodiment of the method, an authentication may be performed between the parcel locker and the holder of the user e-token. The authentication may be performed after the WPAN connection is established between the holder and the parcel locker, but before transmittal of the user e-token.

The authentication may comprise transfer of a challenge from the holder to the parcel locker, transfer of a challenge key from the parcel locker to the holder and a subsequent act of comparing the challenge and the challenge key performed by the holder, which then, if the challenge and the challenge key match, automatically transmits the user e-token.

The authentication may be performed automatically.

In an example of the method, wherein the user e-token(s), the synchronisation token(s) and/or the acknowledgement e-token(s) is/are communicated to/from a user application adapted to be installed on a mobile smart device, comprising a processor and communication means.

The embodiments of the user application and the mobile smart device for executing the user application may have effects and advantages in line with those previously described in connection with communication of the e-tokens to and from the parcel locker, which may include the use of a mobile smart device for carrying and transmitting - or piggybacking - the communicated data.

Another effect of this method is that e-tokens may be communicated from a parcel locker to a server where only the communication standard is changed and not the content of the e-token, hence, the user application and the mobile smart device performs a signal transformation. This may be advantageous in regard to eliminating the need for internet and/or mobile communication coverage at the location of the parcel locker, while achieving a broad coverage for the further communication from the user application and the mobile smart device via a mobile communication system.

A further effect of the embodiment may be that the mobile smart devices do not access the content of the e-tokens but only carries or piggybacks the e-tokens, which may be advantageous both in regard to the robustness of the parcel allocation system and the mobile smart device.

A robust system may refer to a system with a high security against hacking. A robust system may also refer to a system with a high level of redundancy.

In an example of the method wherein the operation of the door is battery powered.

This embodiment may be rendering other power supply redundant e.g. connection to a power supply network, thereby obtaining a parcel locker, which may be operated in areas or locations without a hardwired power supply. This may be advantageous in regard to operating the parcel locker in locations where there is no access to a stable power supply or any power supply at all. Furthermore, it may be advantageous as regards the operation not being affected by power failures such as power outage or power peaks.

The battery operated operation of the parcel locker may have the further effect of fast and easy installation, where there is no need for skilled persons such as electricians for installing the parcel locker. The installation may instead of a plug-and-play installation be referred to simply as a place-and-play installation.

An object of the invention may be achieved by a parcel locker comprising a parcel locker chassis, comprising an outer frame, configured with a base plate onto which the parcel locker rests. The parcel locker further comprises one or more compartments, each compartment having at least one door provided with a mechanical lock to engage with the parcel locker chassis. Furthermore, the parcel locker comprises parcel locker processor means and parcel locker communication means adapted to perform the acts of the method for operating a door having a mechanical lock of a parcel locker compartment.

In one aspect, the parcel locker may comprise a sustainable enclosure as part of the chassis or outer frame. The material used for the parcel locker may be metal, plastic material, fibre composite or comparable materials. The outer frame may comprise a combination of materials. The enclosure or outer frame may furthermore have an outer finish, comprising weather proof paint or other coating material. The hardware specification of the parcel locker may be two racks with individual doors and compartments of different sizes.

In one aspect, means to access the individual compartments or other parts of the parcel locker in case of a failure should be provided.

The door having a mechanical lock may be controlled by an electrical switch, which triggers a mechanical device providing for opening and/or closing of the door to the compartment. The unlocking may be controlled by an electrical switch, such that the user does not need to perform any action for unlocking the door. The locking may be controlled by an electrical switch but may also be a mechanical lock, which locks mechanically when the door is closed by a user. The compartment door may be attached to mechanically compressible means, which expands to open the door, once the door is unlocked.

The door having a mechanical lock may alternatively be fully-automated to open and close the door to ensure that the compartment is closed once it has been used.

In one aspect the electronics comprised in the parcel locker may be comprised in a separate compartment. This compartment may also comprise a door having a mechanical lock. In one aspect the electronics and batteries comprised in the parcel locker may be accessible in case of a failure. In a further aspect, means to open the compartment in such a case must be provided.

One effect of this embodiment is that the user e-token may comprise all information and instructions for the parcel locker. A fully self-serviced parcel locker may thereby be achieved, as the e-token gives access to a compartment through the generated parcel locker command. The e-token is the access key, so to speak.

A further effect of the embodiment is that the e-token may be carried by a single holder. Thus, the parcel locker does not comprise any information of the user e-token. This may provide for a robust parcel locker in respect to securing safety for the users of the parcel locker and controlling who may gain access to the compartments.

Due to the use of user e-token, only a single carrier of the user e-token and, hence, the data to be received by the parcel locker and a single communication connection is required between the parcel locker and the holder of the user e-token. The holder of the user e-token may be a parcel consignor, parcel consignee, a courier or maintenance professional. This is not an exhaustive list and may only serve as examples.

A further effect of this embodiment may be that the service point may be operated as a self-service service point or, in other words, the parcel locker is an unstaffed service point with the advantage of reducing costs for service personal for operation of the service point. A further advantage of this embodiment may be that the service points can be distributed broadly and in remote areas to generate more pick-up places which pick-up places are widely scattered, compared to serviced postal offices.

The parcel lockers may be produced in different hardware configurations. The hardware configuration of the parcel locker refers to the configuration of the comprised compartments. The hardware configuration may be a combination of different sized compartments, a combination of equally sized compartments, a single compartment or the like. For example a configuration could be a unit of nine compartments mixed of small, medium and large compartment sizes.

The hardware configuration and the number of parcel lockers may be adapted to each location to accommodate for the demand. The demand may reflect the size of parcels the interval of deliveries, the time interval from delivery to pick up or other aspects.

The time interval from delivery to pick up may for example be dependent on the character of the goods in the parcel. One example could be if the parcel comprises food or medicine to be kept at a given temperature interval, below or above a certain temperature, the pick-up time interval may be limited to a number of hours from delivery. Whereas the pick-up time for a delivery of non-temperature dependent items may be several days.

The parcel lockers may in a certain extend be used for distribution and allocations of parcels on an ad hoc basis, where the consignor and the consignee do not have regular or large shipments, e.g. weekly or daily delivery of large shipments from company to company, so the demand in capacity of the parcel lockers may vary, depending on the time of year, festive seasons and the location. Such conditions may be part of the considerations when choosing hardware configuration and number of parcel lockers to be adapted to different locations.

In one aspect, the parcel locker may comprise a temperature sensor for measuring the surrounding temperature in a single compartment.

This may have the effect of assessing the temperature of the parcel over time. This may be advantageous in regard to estimating the time interval from delivery to pick up, where the character of the goods in the parcel necessitates the parcel to be kept at a given temperature interval, below or above a certain temperature. This could be parcels comprising food, medicine, biological matter, chemical compounds or the like. The temperature may depend on the surrounding weather conditions, the temperature of the location of the parcel locker and if it is packaged in insolating materials, including cooler or heater bricks.

A further effect of the embodiment - due to the character of the parcel locker being a location for delivery of or picking up a physical parcel - the holder of the user e-token is at the location of the parcel locker for delivery or collection of the parcel to transfer the user e-token. This may be advantageous in regard to using a single communication connection between the parcel locker and the holder of the e-token. It may further be advantageous in regard to transmitting a limited dataset, due to the character of the user e-token. A further advantage may be that only a limited communication range is required.

This may lead to the use of a data communication standard with low power consumption e.g. via Bluetooth communication, as previously described, with the advantages of eliminating the need for GSM and/or internet coverage at the location of the parcel locker and achieving a low power consuming parcel locker.

A further effect of this embodiment, by generating sequence numbers connected to the parcel locker itself or to a specific piece ID, is that the parcel locker may continuously be updating its own status. Alternatively or coincident hereto, the embodiment may provide for a receiver of the synchronisation e-tokens to be updated on the status of one or more parcel lockers.

In one aspect, the parcel locker may keep a minimum of information of performed user events and/or the parcel locker's current status, such that a minimum of processor means and/or storage means may be required in the parcel locker. This may also aid for further minimizing the power consumption of the parcel locker.

A further effect of this embodiment may be that, similar to the communication of the user e-token, the synchronisation e-token also needs only a single carrier of the data and a single communication connection between the parcel locker and the carrier of the data. The carrier of the data may be any holder of the user application. This could for example be a parcel consignor, a parcel consignee, a courier or maintenance professional. This is not an exhaustive list and may only serve as examples.

One advantage of this embodiment is that the method may entail transmitting the synchronisation e-token immediately or carrying the synchronisation e-token until a proper communication connection to a receiver may be established. Thus, the method provides for piggybacking of the synchronisation e-token from the parcel locker to for example a server, where the status of one or more parcel lockers may be updated. This could be advantageous for the use of the parcel locker in a distributed network of multiple parcel lockers.

As previously described, the use of piggybacking may result in that a synchronisation e-token to be communicated to for example a server, may not reach the server at all, or may reach the server long after the user event has been performed. By enclosing sequence numbers in the synchronisation e-tokens, later generated synchronisation e-tokens to be received by the server may compensate for lost or late-received synchronisation e-tokens.

In one aspect, the performed instructions may be numbered with sequential numbers for each parcel locker and stored by that parcel locker.

In a further aspect, the transmitted synchronisation e-tokens may comprise a row of consecutive events and the associated numbers for the associated parcel locker.

This may be advantageous in regard to ensuring that the status of the parcel locker may be updated with any performed instructions of user events. By numbering the performed instructions, it may be ensured that information of all performed user events are actually received by the server.

In a further embodiment of the parcel locker, the parcel locker processor means comprises a service point encryption key and is configured to decrypt received user e-token(s) with the service point encryption key.

An effect of this further embodiment may be that the encryption key is not transmitted to and/or from the parcel locker with the advantage of mitigating any risk of hacking the parcel locker or the user e-tokens. A further advantage is that in case one encryption key may be decoded, only a single parcel locker may be affected.

In one embodiment the one or more compartments of the parcel locker may be reach-through compartments having two doors. The two doors may be a front-end door and a back-end door, respectively. Each of the front-end door and the back-end door may be provided with a mechanical lock to engage with the parcel locker chassis.

One effect of having compartments with front-end and back-end doors may be that the parcel locker can be loaded from a restricted access area using e.g. the back-end door and unloaded from a public access area using the front-end door. This may be advantageous in regard to pick-and-go services from a warehouse, drug stores or similar facilities. In such cases the goods may be packed in storage areas with only employee access and arranged by an employee, being the consignor, in a compartment using the back-end door. The goods may subsequently be unloaded by a consignee from a public access area using the front-end door.

The employee may receive a user e-token which allows for accessing the compartment using the back-end door. Associated synchronisation and acknowledgement e-token may subsequently be generated, transmitted and received.

The consignor may subsequently receive a different user e-token which allows for accessing the compartment using the front-end door. Again, associated synchronisation and acknowledgement e-token may subsequently be generated, transmitted and received.

Another advantage may be that the parcel locker may be built into a permanent wall separating two areas thereby improving the security of the consignor. This may be especially relevant for drug stores.

In one embodiment of the parcel locker each door may be selected from a group consisting of a sliding door, roll-up door, folding door, accordion door, gate and cabinet door.

The door may have any size. The size may be a size generally referred to as port or gate sizes, typically measured in meters and/or decimetres, and down to sizes generally referred to as cabinet or locker door sizes, typically measured in decimetres and/or centimetres.

One effect of this embodiment may be to customize the parcel locker to the types and sizes of parcel being handled. In one case the parcels may be of a size and/or weight requiring benefitting from an easy access at floor level. In another case, the parcels may be handled by fork lifts for reduce the workload of the consignor and/or the consignee and thus, the size of the doors should accommodate for that.

Alternatively, the parcel locker may be customized to the surrounding conditions existing at the location of the parcel locker. In one case the parcel locker may be exposed for a windy environment. In such case and in combination with large size compartments, a folding or sliding door may be advantageous instead of a hinged type solid door to reduce mechanical wear and tear.

In a further embodiment the parcel locker further comprises a battery and is configured to be battery operated.

The battery may also be a super capacitor, rechargeable batteries or comparable units.

In one aspect, the parcel locker may comprise a LI-ION battery pack of 7.2 V with a capacity of 19000 mAh. In test, this embodiment has proved a life time beyond 2 years, when receiving up to 18 user e-tokens a day with associated acts leading to opening a parcel locker door, generating a synchronisation e-token and receiving an acknowledgement e-token. This is just one example of a suitable battery pack to be applied, and the battery pack to be used is by no means limited to this example.

The battery may be replaceable or fixed. The lifetime of the batteries continues to increase and thus, battery packs with a sufficient lifetime may be fixed in the parcel locker and last for the entire life time of the parcel locker. This may also be the case when rechargeable batteries are used, which are charged by renewable energy sources.

In one aspect, the batteries comprised in the parcel locker may be comprised in a separate compartment. This compartment may also comprise a door having a mechanical lock. In one aspect, the batteries comprised in the parcel locker may be accessible in case of a failure. In a further aspect, means to open the compartment in such a case must be provided.

A further effect of this embodiment may be rendering other power supply redundant, e.g. connection to a power supply network, thereby achieving a parcel locker, which may be operated in areas or locations without a hardwired power supply. This may be advantageous in regard to operating the parcel locker in locations where there is no access to a stable power supply or any power supply at all. Furthermore, it may be advantageous in regard to that the operation is not being affected by power failures such as power outage or power peaks.

The battery operated operation of the parcel locker may have the further effect of fast and easy installation, where there is no need for skilled persons such as electricians for installing the parcel locker. The installation may instead of a plug-and-play installation be referred to simply as a place-and-play installation.

In one aspect, the battery may be rechargeable. Furthermore, the battery may be rechargeable by renewable energy, where the renewable energy sources may include sunlight, wind, temperature, rain or similar sources.

In one embodiment the parcel locker may comprise a motion sensor in communication with the parcel locker processor means. The motion sensor may be adapted to transmit a motion signal. The parcel locker processor means may be adapted to reject reception of user electronic tokens and/or acknowledgement electronic tokens upon receipt of the motion signal.

The motion sensor may be an accelerometer, a tilt sensor or a comparative sensor measuring a motion of the parcel locker.

One effect of this embodiment may be that the parcel locker when moved or shaken may not be accessible using user or acknowledgement tokens, thereby mitigating the risk of non-authorized access to the parcel lockers. This may be especially advantageous in cases of vandalism and/or theft of the parcel locker.

In one embodiment of the parcel locker, the parcel locker processor means upon receipt of the motion signal, may be adapted to transmit beacon signals being a distress signal comprising the service point ID.

In one embodiment the parcel locker may comprise a tracking unit in communication with the parcel locker processor means. The tracking unit may be adapted to transmit a tracking signal. The parcel locker processor means may be adapted to reject reception of user electronic tokens and/or acknowledgement electronic tokens upon receipt of the tracking signal. The parcel locker may further be adapted to transmit a distress beacon signal and/or a help e-token comprising the service point ID and a GPS location.

One effect of this embodiment may be that the parcel locker when moved from its original installation position may not be accessible using either user or acknowledgement e-tokens, thereby mitigating the risk of non-authorized access to the parcel locker.

This may be advantageous in cases of theft of the parcel locker. The distress beacon signal may be received by any user application in the vicinity of the parcel locker. The user application may be adopted to transmit data to the server to localize the parcel-locker. Alternatively, a help e-token may be received by any user application in the vicinity of the parcel locker and this help e-token may be transmitted to the server to localize the parcel-locker.

In one aspect, upon activation of the motion sensor, the parcel locker may only transmit a distress beacon signal and not the general beacon signal thereby to preventing a WLAN connection to be established to a user application and preventing any transfer of user e-tokens and/or acknowledgement e-tokens.

This may also be advantageous in cases where the parcel locker is moved on purpose to a new position.

In any case, any parcel consignors, parcel consignees, couriers or maintenance professionals relevant for the parcel locker may be informed of the intended change of position or the non-authorized relocation.

In a further embodiment of the parcel locker, the base plate is configured with one or more base plate through-going holes, adapted to be anchored to one or more foundation elements by fastening means going through the through-going holes.

The fastening means may comprise two parts which interlocks to fixate the base plate to the foundation, e.g. screw and bolt, riveted joints or comparable means.

One effect of this embodiment may be that the parcel locker may be installed with fastening means, which may be secured inside the parcel locker, thereby achieving a mounted parcel locker, without access from the outside to the fastening means, mitigating the risk of vandalism and/or theft of the parcel locker.

A further effect may be that the parcel locker may be installed without having to use specialized tools for preparing holes for example by drilling or cutting in the parcel locker, which may be an advantage in regard to maintaining the surface of the parcel locker. A further advantage may be easy and/or fast installation, where there is no need for skilled persons such as construction workers for installing the parcel locker. This further provides for the previously described place-and-play installation.

In one aspect, the parcel locker may be installed by anchoring it to pre-cast foundations using suitable fastening means.

An object of the invention may be achieved by a parcel locker comprising a foundation, comprising one or more foundation elements, each configured with an upper surface, a lower surface, one or more foundation through-going holes extending from the upper surface to the lower surface, and one or more threaded ground-anchoring means, comprising a head and a tip, each threaded ground-anchoring means arranged through a foundation through-going hole adapted to be mounted with the tip in the soil.

A parcel locker wherein the foundation is provided with fastening means arranged through the through-going holes in the base plate.

The fastening means may comprise two parts which interlocks to fixate the base plate to the foundation, e.g. screw and bolt, riveted joints or comparable means.

One effect of this embodiment is that the foundation elements may be pre-cast, thereby avoiding comprehensive and time consuming construction work for constructing a foundation on the spot. A concrete foundation constructed on the spot without additional anchoring means to the soil may require a significant amount of material and may take days to harden before the parcel locker may be mounted subsequently.

A further effect of this may be that the foundation element may be configured as a lighter and less voluminous construction, compared to a traditional concrete-only foundation, due to the use of threaded ground-anchoring means. When the threaded ground-anchoring means are arranged with the tip in the soil and arranged through the foundation through-going hole, the foundation elements may obtain the same resistance as traditional concrete-only foundation, in regard to vertical lifting and horizontal applied forces even with a smaller and lighter concrete construction.

A further effect of using the foundation elements for installing the parcel locker may be that the parcel locker is installed with sufficient foundation without having to use specialized tools for casting concrete, preparing holes and/or anchoring means in a concrete foundation. This may be an advantage in regard to easy and/or fast installation, where there is no need for skilled persons such as construction workers for installing the parcel locker.

A further effect may be that the foundation of a single parcel locker may comprise multiple foundation elements, thereby further easing the handling of each foundation element, as each foundation element may be made even more lightweight and less voluminous.

The foundation elements further provides for the previously described place-and-play installation.

In an example, the method comprising a step of using a user application comprising instructions for carrying out the acts of transmitting and/or receiving communicated data to/from the parcel locker.

In one aspect, the user application may be adopted to receive a distress beacon signal from the parcel locker and generate data comprising the service point ID and a GPS location of the user application. The user application may furthermore be adopted to transmit the generated data to the server. Alternatively, a help e-token may be piggybacked by any user application from the parcel locker to the server. A GPS location of the user application may be in an anonymized form, to prevent any risk of surveillance.

In an example, the method comprising a step of using a mobile smart device, comprising a processor for executing the user application for carrying out the acts of transmitting and/or receiving communicated data to/from the parcel locker.

The embodiments of the user application and the mobile smart device of executing the user application may have effects and advantages in line with those previously described in connection with communication of the e-tokens to and from the parcel locker, which may include the use of a mobile smart device for carrying and transmitting - or piggybacking - the communicated data, including:
- The parcel locker may only need to communicate with a mobile smart device within a short distance, thereby enabling the use of a low power consuming data communication connection.
- The communication between the parcel locker and the user application may not require any internet connection at the parcel locker location, thereby avoiding adding any extra power load to the mobile smart device with the installed user application when collecting or delivering a parcel. A more power consuming communication with the server may be performed at a later time.
- The user application only sends the e-token to an associated parcel locker and only piggybacks small amounts of encrypted data from the parcel locker to the server.
- The parcel consignor or parcel consignee holding the user e-token may use the user application installed on a mobile smart device when delivering and/or picking up parcels and hence, the holder of the user e-token already has the user application activated when picking up /delivering the parcel, and the piggybacking of one or more synchronisation and/or acknowledgment e-tokens may not include any further actions from the user e-token holder. Furthermore, the e-tokens may be passive and/or encrypted data, and therefore do not add any further risk to the users mobile smart device.
- The use of piggybacking may result in that a synchronisation e-token to be communicated from the parcel locker to for example a server, via the user application, may not reach the server at all or may reach the server long after the event has been performed. But this may be accounted for by transmitting several synchronisation e-tokens, comprising overlapping information or by transmitting the same synchronisation e-token to multiple user applications. This also accounts for the acknowledgement e-token.

An effect of using a WPAN communication standard may be that only a user application with a user e-token matching the parcel lockers service point ID may be communicated. One advantage of this embodiment is that the parcel locker, in connection with performing an instruction of the user event, may generate and transmit a synchronisation e-token to the user application immediately or to a later connecting user application. The user application receiving the synchronisation e-token may then transmit the synchronisation e-token immediately or carry it until a proper communication connection to the server may be established. Thus, the user application uses the mobile smart device for piggybacking e-tokens from the service point to the server.

The transmitted beacon signal from the parcel locker and the communicated e-tokens between the parcel locker and the user application may be communicated using a Bluetooth connection with the effects and advantages previously described. Comparable WPAN communication standards with the same characteristics of low power consumption and a limited communication range may be used. Furthermore, the communication standard may generally be widely used and implemented in mobile smart devices. This has the advantage of easy access to implantation and use of the method.

The embodiment may have the further effect of achieving a real-time communication with the service point through a third party's mobile smart device installed with the user application. This may for example be relevant if a courier, a maintenance professional, a consignee, a consignor or another party requires help or guidance from a support employee. The support employee may then in real-time communicate with the service point by transmitting and/or receiving e-tokens. A real-time communication requires that the mobile smart device to be used has data connection. The real-time communication may include tasks such as requiring a status log from a parcel locker, opening a door to a compartment of a parcel locker or comparable tasks. These are merely examples and should be read as such.

This disclosure can advantageously be combined with one or more of the following sixt disclosures. Furthermore, the following six disclosures can be combined with each other.

A first disclosure may be use of a mobile smart device installed with a user application in a system comprising a server and one or more service points for transmitting e-tokens between the server and a service point. A use which includes using a communication standard for a data transmission supporting mobile communication system for communicating the e-tokens to the server, and using a communication standard of a WPAN for communicating the e-tokens to the service point, such that the user application acts as a signal transformer for the e-tokens being piggybacked by the user application between the server and the service point, which use is for a parcel allocation system.

A second disclosure may be a computer-implemented method for allocation of parcels to one or more service points comprising acts of receiving e-tokens using a first communication standard, and transmitting e-tokens, using a second communication standard enabling a communication direction. A method wherein the first communication standard is a communication standard of a data transmission supporting mobile communication system, and the second communication standard is a communication standard of a WPAN in a communication direction being a service point communication direction, and the first communication standard is a communication standard of a WPAN, and the second communication standard is a communication standard of a data transmission supporting mobile communication system in a communication direction being a server communication direction.

A third disclosure may be a computer-implemented method for operating a distributed network of service points having a service point ID for allocation of parcels. The method comprises acts of assigning parcel locker(s) to the distributed service point network, each parcel locker being a service point, comprising one or more compartments and a service point ID, assigning user(s) to the distributed service point network and using piece IDs for each parcel being allocated in the distributed service point network. The method further comprises an act of communicating e-tokens to a service point, wherein the e-tokens are communicated via a user application to the service point using a communication standard of a data transmission supporting mobile communication system for communicating the e-tokens to/from the user application and a communication standard of a WPAN for communicating the e-tokens between the user application and the service point, such that the user application acts as a signal transformer for the communication of the e-tokens.

A fourth disclosure may be use of a distributed network of mobile smart devices installed with a user application in a system comprising a server and one or more service points for transmitting electronic tokens between the server and a service point. A use which includes using a communication standard for a data transmission supporting mobile communication system for communicating the electronic tokens to the server, and using a communication standard of a wireless personal area network for communicating the electronic tokens to the service point, such that the user application acts as a signal transformer for the electronic tokens being piggybacked by the user application between the server and the service point. The electronic tokens may include user electronic tokens, synchronisation electronic tokens and/or acknowledgement electronic tokens. For each user electronic token one or more synchronisation electronic tokens and/or acknowledgement electronic tokens may be piggybacked by one or more user applications of the distributed network of mobile smart devices. The use may be for a parcel allocation system.

A fifth disclosure may be a computer-implemented method for operating a system for allocation of parcels to one or more service points. The computer-implemented method may comprise acts of receiving electronic tokens using one communication standard, and transmitting electronic tokens using another communication standard. The method may further comprise an act of enabling a communication direction. The communication standards may be a communication standard of a data transmission supporting mobile communication system and a communication standard of a wireless personal area network.

One communication direction may be a service point communication direction, where the electronic tokens may be received using the communication standard of a data transmission supporting mobile communication system and transmitted using the communication standard of a wireless personal area network. Another communication direction may be a server communication direction, where the electronic tokens may be received using the communication standard of a wireless personal area network and transmitted using the communication standard of a data transmission supporting mobile communication system.

The electronic tokens may include user electronic tokens, synchronisation electronic tokens and/or acknowledgement electronic tokens. The receiver and transmitter of a user electronic token may be a singled out node communicating in a service point communication direction. The receiver and transmitter of a synchronisation electronic token may be any one of multiple distributed nodes communicating in a server communication direction. The receiver and transmitter of an acknowledgement electronic token may be any one of multiple distributed nodes communicating in a service point communication direction.

A sixth disclosure may be a computer-implemented method for operating a distributed network of service points having a service point ID for allocation of parcels. The method comprises acts of assigning parcel locker(s) to the distributed service point network, each parcel locker being a service point, comprising one or more compartments and a service point ID, assigning user(s) to the distributed service point network and using piece IDs for each parcel being allocated in the distributed service point network. The method further comprises an act of communicating electronic tokens to a service point, wherein the electronic tokens are communicated via a user application to the service point, using a communication standard of a data transmission supporting mobile communication system for communicating the electronic tokens to/from the user application and a communication standard of a wireless personal area network (WPAN) for communicating the electronic tokens between the user application and the service point, such that the user application acts as a signal transformer for the communication of the electronic tokens. The electronic tokens may include user electronic tokens, synchronisation electronic tokens and/or acknowledgement electronic tokens. Each of the user electronic tokens may be transmitted to the service point via a single user application. Each of the synchronisation electronic tokens received from the service point and/or each of the acknowledgement electronic tokens transmitted to the service point may be communicated by one or more user applications in a distributed network of user applications.

### Description of the Drawing

Figure 1 illustrates one embodiment of the parcel locker.
Figure 2 illustrates one embodiment of the method for operating a door having a mechanical lock of a parcel locker compartment.
Figure 3 illustrates three embodiments of the method for operating a door having a mechanical lock of a parcel locker compartment.
Figure 4 illustrates one embodiment of the foundation element.
Figure 5 illustrates one embodiment of a distributed system of parcel lockers for allocation of parcels.

### Detailed Description of the Invention

| | |
|---|---|
| 22 | Beacon signals |
| 23 | Distress beacon signal |
| 24 | Service point ID |
| 30 | Server |
| 42 | Piece ID |
| 50 | User e-token |
| 52 | Instructions |
| 54 | User event |
| 58 | Sequence number |
| 60 | Synchronisation e-token |
| 62 | Help e-token |
| 70 | Acknowledgement e-token |
| 80 | Communicated data |
| 90 | User application |
| 92 | Mobile smart device |
| 94 | Processor |
| 96 | Communication means (mobile smart device) |
| 100 | Method |
| 102 | Transmitting |
| 104 | Creating |
| 106 | Receiving |
| 108 | Generating |
| 112 | Displaying |
| 192 | Receiving (user application) |
| 194 | Transmitting (user application) |
| 200 | Parcel locker |
| 202 | Parcel locker communication means |
| 206 | Parcel locker processor means |
| 210 | Chassis |
| 212 | Compartment |
| 214 | Door |
| 214B | Back-end door |
| 216 | Battery |
| 217 | Outer frame |
| 218 | Base plate |
| 220 | Base plate through-going hole |
| 230 | Fastening means |
| 240 | Foundation element |
| 242 | Upper surface |
| 244 | Lower surface |
| 246 | Foundation through-going hole |
| 250 | Threaded ground-anchoring means |
| 252 | Head |
| 253 | Tip |
| 260 | Foundation |
| 270 | Parcel locker command |
| 272 | Parcel locker command signal |
| 274 | Lock |
| 276 | Latch |
| 278 | Striking plate |
| 280 | Motion signal |
| 290 | Motion sensor |
| 414 | Wireless personal area network |
| 500 | Use |

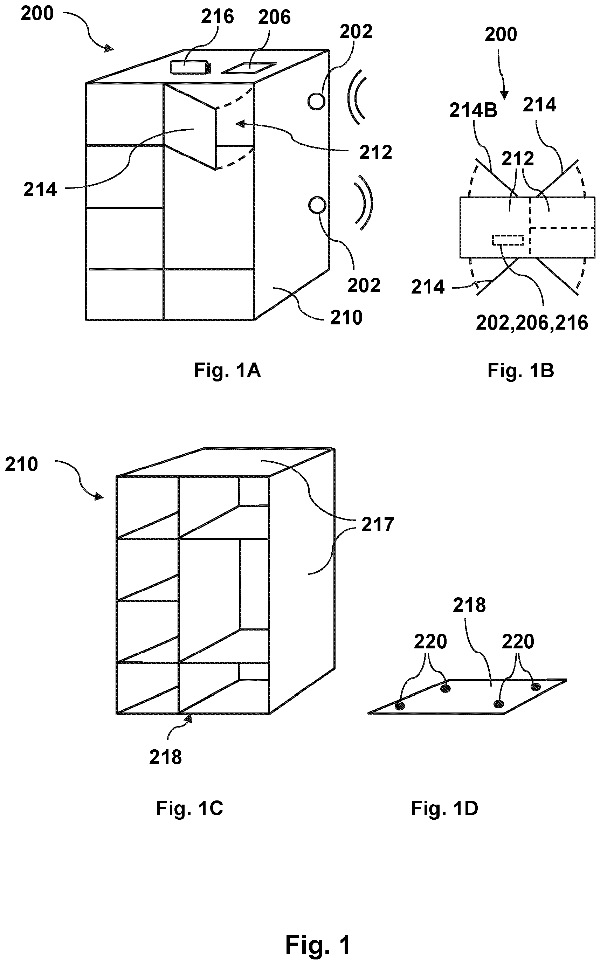

Figure 1 illustrates one embodiment of the parcel locker. Figure 1A illustrates one embodiment of a parcel locker 200 in perspective view and figure 1B illustrates one embodiment of the parcel locker 200 in top view, figure 1C illustrates one embodiment of a parcel locker chassis 210, and figure 1D illustrates a parcel locker base plate 218.

The embodiment of the parcel locker 200 illustrated in figure 1A comprises a parcel locker chassis 210, one or more compartments 212, each compartment having at least one door 214 with a lock configured to be locked to the parcel locker chassis 210. The parcel locker 200 further comprises a battery 216 such that the parcel locker may be battery operated. The parcel locker 200 further comprises parcel locker communication means 202 and parcel locker processor means 206.

The illustrated embodiment of the parcel locker 200 in figure 1B comprises multiple compartments 212, each compartment having at least one door 214 with a lock configured to be locked to the parcel locker chassis. The battery 216, the parcel locker communication means 202 and the parcel locker processor means 206 are illustrated by a single dot-lined feature indicating, that the features are arranged inside the chassis. The parcel locker 200 may be designed with reach-through compartments 212 as illustrated on the left hand side of the parcel locker. In this embodiment the reach-through compartments have two doors, a front-end door 214 and a back-end door 214B accessing a single compartment 212 which facilitates front-end and back-end loading of the compartment. The reach-through compartment may in other embodiments only comprise a single door 214 and thus being front-loaded. The parcel locker 200 may be designed with half-through compartments 212 as illustrated on the right hand side of the parcel locker. In this embodiment the half-through compartments have a single door accessing a single compartment 212 facilitating front-end loading of the compartment.

The embodiment of the parcel locker chassis 210 illustrated in figure 1C comprises the parcel locker outer frame 217. The outer frame 217 comprises a base plate 218 for the parcel locker to rest on.

Figure 1D illustrates one embodiment of the base plate 218 comprising base plate through-going holes 220. The illustrated embodiment comprises four base plate through-going holes 220, one in each corner. Other embodiments of the base plate may comprise more or fewer base plate through-going holes 220. Furthermore, the holes 220 may be placed in alternative ways for other embodiments.

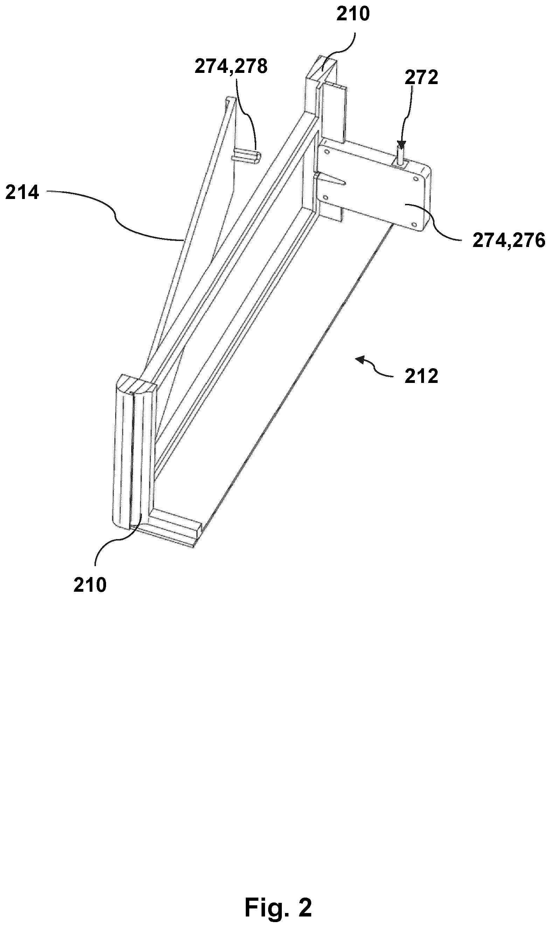

Figure 2 illustrates one embodiment of a parcel locker compartment 212. Only the section of the parcel locker compartment 212, comprising the door 214 is shown, illustrating the section from inside the compartment 212 with the door 214 attached to the chassis 210. The compartment door 214 locks to the chassis 210 by use of a lock 274. The lock 274 attached to the chassis 210 is illustrated as a cassette, which may comprise a latch 276 which interlocks with a striking plate 278 attached to the door 214. In one embodiment the lock receives the transmitted parcel locker command signal 272, which activates the latch 276 to release the striking plate 278. The parcel locker command signal 272 may be an electrical signal, and the lock 274 may comprise electrical means, which activates the latch 276 when an electrical signal is received.

The compartment door may comprise compressible mechanical means (not illustrated), which opens the compartment door 214, once the latch 278 is activated and releases the striking plate 278. The latch 276 may be operated in such a way, that it interlocks with the striking plate 278, when the compartment door 214 is physically pushed from an open position to a closed position.

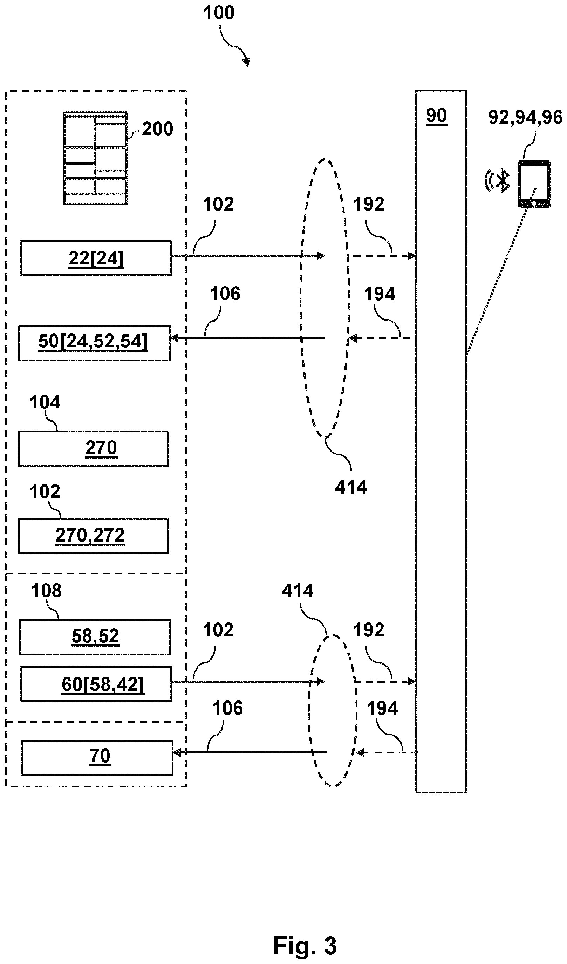

Figure 3 illustrates three embodiments of the method 100 for operating a door having a mechanical lock of a parcel locker compartment. The acts performed by the parcel locker are illustrated on the left hand side with the dotted box illustrated with a parcel locker 200.

One embodiment is illustrated with the upper dot-lined box on the right hand side. The parcel locker 200 transmits 102 beacon signals 22, comprising the service point ID 24 and receives 106 a user e-token 50 tagged with a matching service point ID 24. The beacon signal 22 and the user e-token 50 are communicated via a WPAN communication standard 414. For matching service point IDs 24 of the user e-token 50 and the beacon signal 22, a WPAN connection is established. Each user e-token 50 comprise instruction 52 of a user event 54. The parcel locker generates 104 a parcel locker command 270, according to the received instruction 52, and transmits a parcel locker command signal 272. The parcel locker command signal 272 may be an electrical signal to a locker means activating a latch therein for opening a door to a compartment.

Another embodiment is illustrated with the middle dot-lined box including in the previously described embodiment, wherein a sequence number 58 is generated 108 for a received instruction 52, and a synchronisation e-token 60 is transmitted 102, comprising the sequence number and the piece ID of a parcel, for which the instructions are performed.

Yet another embodiment is illustrated with the bottom dot-lined box, including in the method 100 to comprise all the illustrated acts performed by the parcel locker 200. In this embodiment, an acknowledgement e-token 70 is received 106.

For all three illustrated embodiments, the communicated data to and/or from the parcel locker 200 is received 192 by and/or transmitted 194 from a user application 90 adapted to be installed on a mobile smart device 92, comprising a processor 94 and communication means 96. The data is communicated using a 414 WPAN connection between the parcel locker 200 and the user application 90.

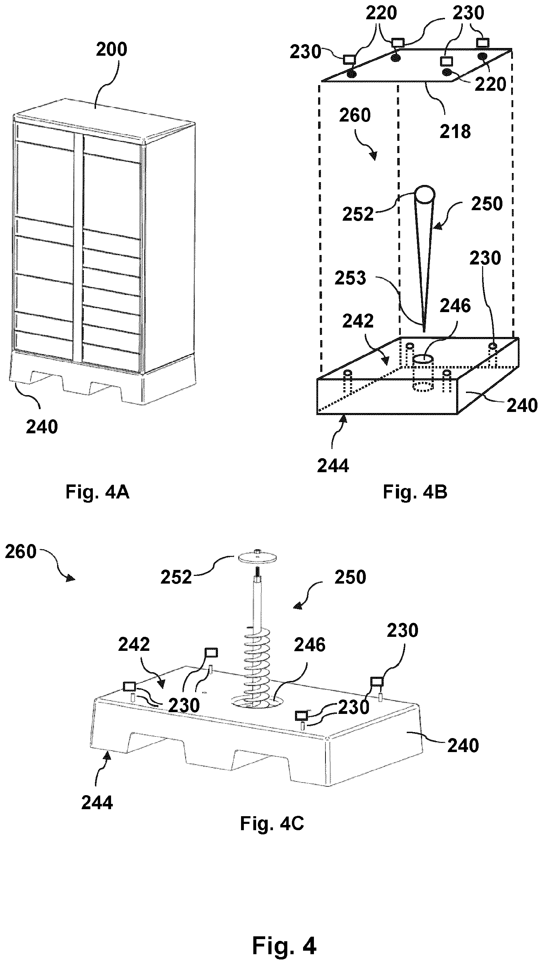

Figure 4 illustrates one embodiment of the parcel locker installed with a foundation 260. Figure 4A illustrates a parcel locker 200 mounted with a foundation element 240. Figure 4B illustrates one embodiment of a foundation 260 and the use of the foundation 260 for anchoring the parcel locker via the base plate 218. Figure 4C illustrates another embodiment of a foundation 260.

The foundation element 240 illustrated in figure 4A is designed such that it may be transported and positioned using a pallet jack. The parcel locker is anchored to the foundation element 240 which is further anchored to the ground - this is not explicitly illustrated. The installation does not leave any anchoring means available from the outside of the installation.

The embodiment illustrated in figure 4B shows a foundation 260 for anchoring a parcel locker with fastening means 230 arranged in the foundation element 240 and adapted anchoring means (not shown) through the base plate's through-going holes 220 in the base plate 218. The base plate 218 is also illustrated in figure 1C.

The illustrated foundation 260 comprises a foundation element 240 configured with an upper surface 242, a lower surface 244 and one or more foundation through-going holes 246 from the upper surface 242 to the lower surface 244. The illustrated embodiment of a foundation 260 comprises a single ground-anchoring means 250 with a head 252 and a tip 253. Other embodiments of the foundation 260 may comprise several ground-anchoring means 250. Each ground-anchoring means 250 is adapted to be mounted into the soil by arranging the ground-anchoring means 250 through a foundation through-going hole 246 with the tip 253 going into the soil. In other words, a ground-anchoring means 250 is arranged such that the tip 253 is taken through a foundation through-going hole 246 from the upper surface 242 to the lower surface 244, such that the head fastens the foundation element 240 to the ground. The foundation element 240 may comprise a slot for the head 252 to be lowered into, such that only part of or none of the head 252 is above the upper surface 242 but in such a way, that the head 252 is used for fastening the foundation element 240 to the ground. This is clearly illustrated in figure 4C.

Figure 4C illustrates another embodiment of a foundation 260, which is designed such that it may be transported and positioned, using a pallet jack. The foundation element 240 comprises fastening means 230 arranged to penetrate the sole-piece through-going holes 220 (figure 4B) to anchor the parcel locker to the foundation element 240 using adapted anchoring means (not shown) locking the base plate to the foundation element 240.

The fastening means 230 comprised in the foundation element 240 may be casted into the foundation element 240 as units protruding from the upper surface with internal or external thread, non-protruding units, a combination of these or other units suitable as anchoring means.

Figure 4C illustrates protruding units which may have internal or external thread. These may be used as anchoring means by lowering the base plate to the upper surface 242 with the protruding units going through the base plate holes 220 together with a screw or screw bolt to fasten the base plate to the foundation element 240. Figure 4B illustrates non-protruding units which may comprise internal thread (screwed female) which may be used as anchoring means by lowering the base plate to the upper surface 242, together with a screw going through the base plate holes 220 into the internal thread to fasten the base plate to the foundation element 240.

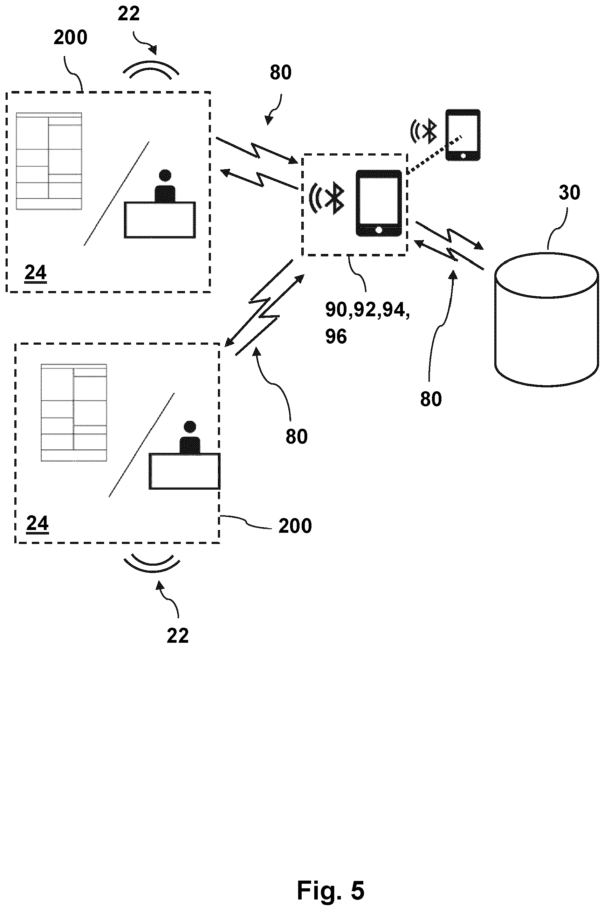

Figure 5 illustrates one embodiment of a distributed system of parcel lockers 200 for allocation of parcels. The illustrated parcel allocation system comprises two parcel lockers 200. The parcel lockers may be referred to as a service point. Furthermore, the parcel locker 200 may be installed in connection with a staffed service point as illustrated by the man and the counter. The system further comprises multiple user applications 90, each adapted to be installed on a mobile smart device 92. The system further comprises a server 30. The mobile smart device comprises a processor 94 and communication means 96. The distributed system of parcel lockers 200 for parcel allocation is adapted for executing the acts of the method for opening a door having a mechanical lock of a parcel locker compartment, which comprises acts of communicating data to and from the parcel lockers 200. The communicated data 80 may be further communicated to a server 30. The communicated data 80 to or from each parcel locker 200 and/or the server 30 is received by and/or transmitted from a user application 90 adapted to be installed on a mobile smart device 92. The communicated data 80 may be encrypted with service point encryption keys, each associated with a single parcel locker 200. The parcel locker emits beacon signals 22 advertising of its presence and its service point ID 24. These beacon signals may be used to establish a WPAN network to the mobile smart device 92 if it holds a user e-token tagged with a service point ID 24 matching the service point ID of the beacon signal 22.

## Claims

1. A parcel locker (200) comprising:
- a parcel locker chassis (210), comprising an outer frame (217), configured with a base plate (218) onto which the parcel locker (200) rests, the base plate (218) configured with one or more base plate through-going holes (220);
- compartments (212), each compartment (212) having at least one door (214) provided with a mechanical lock (274) to engage with the parcel locker chassis (210);
- parcel locker processor means (206) and parcel locker communication means (202),
- a battery (216) and the parcel locker (200) are configured to be battery operated; **characterised in that** the parcel locker (200) comprising
- one or more foundation elements (240), wherein the parcel locker (200) is anchored to the one or more foundation elements (240) by fastening means going through the one or more base plate through-going holes (220), wherein the one or more foundation elements (240) are pre-cast concrete, thereby enabling place-and-play installation of the parcel locker (220).

2. A parcel locker (200) according to claim 1, wherein fastening means may comprise two parts, which interlock to fixate the base plate to the foundation.

3. A parcel locker (200) according to claim 2, wherein the two parts comprise screw and bolt, riveted joints or comparable means.

4. A parcel locker (200) according to any one of the preceding claims, wherein parcel locker communication means (202) is Bluetooth or near field communication (NFC) or other standards for WPAN with the same characteristics of low power consumption and limited communication range as Bluetooth or near field communication.

5. A parcel locker (200) according to any one of the preceding claims, wherein the battery (216) is chosen amongst super capacitor, rechargeable batteries, LI-ION battery pack or comparable units.

6. A parcel locker (200) according to claim 5, wherein the LI-ION battery pack has a voltage of 7.2 V with a capacity of 19000 mAh.

7. A parcel locker (200) according to any one of the preceding claims, wherein the parcel locker (200) is without a hardwired power supply during use.

8. A parcel locker (200) according to any one of the preceding claims, wherein an electrical switch controls the mechanical lock (274).

9. A parcel locker (200) according to any one of the preceding claims, wherein
- the foundation element (240) is configured with an upper surface (242), a lower surface (244) and one or more foundation throughgoing holes (246) from the upper surface (242) to the lower surface (244);
- a ground-anchoring means (250) with a head (252) and a tip (253), wherein the ground-anchoring means (250) adapted to be mounted into soil by arranging the ground-anchoring means (250) through one of the one or more foundation through-going holes (246) with the tip (253) going into the soil.

10. A parcel locker (200) according to any one of the preceding claims, wherein
- the parcel locker processor means (206) and the parcel locker communication means (202) are adapted to perform acts of transmitting (102), receiving (106) and generating (108), wherein the acts of transmitting (102), receiving (106) and generating (108) include
- transmitting (102) beacon signals (22) comprising a service point ID (24);
- receiving (106) a user electronic token (50) tagged with a matching service point ID (24) comprising a piece ID (42) and instruction (52) of a user event (54);
- creating (104) a parcel locker command (270) for the received instructions (52); and
- transmitting (102) a parcel locker command signal (272) for the parcel locker command (260) for operating the lock (274),
wherein the user electronic token (50) is received using a communication standard of a wireless personal area network (414), and
wherein said parcel locker processor means (206) and the parcel locker communication means (202) are adapted to perform further acts of;
- generating (108) a sequence number (58) for the instruction (52) of the user event (54);
- generating (108) a synchronisation electronic token (60), comprising the sequence number (58) and the piece ID (42);
- transmitting (102) the synchronisation electronic token (60), and
- receiving an acknowledgment electronic token (70).

11. Use of a parcel locker (200) according to any one of the preceding claims 1-10 for place-and-play installation.

12. Use of a parcel locker (200) according to claim 11 for installation without a hardwired power supply.

## Patentansprüche

1. Paketfach (200), umfassend:
- ein Paketfachgehäuse (210), das einen äußeren Rahmen (217) umfasst, der mit einer Grundplatte (218) konfiguriert ist, auf der das Paketfach (200) ruht, wobei die Grundplatte (218) mit einer oder mehreren Durchgangsbohrungen (220) in der Grundplatte konfiguriert ist;
- Abteile (212), wobei jedes Abteil (212) mindestens eine Tür (214) aufweist, die mit einem mechanischen Schloss (274) zum Eingriff mit dem Paketfachgehäuse (210) bereitgestellt ist;
- Prozessormittel (206) für das Paketfach und Kommunikationsmittel (202) für das Paketfach,
- eine Batterie (216) und das Paketfach (200) so konfiguriert sind, dass sie batteriebetrieben sind;
**dadurch gekennzeichnet, dass** das Paketfach (200) umfasst
- ein oder mehrere Fundamentelemente (240), wobei das Paketfach (200) an dem einen oder den mehreren Fundamentelementen (240) durch Befestigungsmittel verankert ist, die durch die eine oder die mehreren Durchgangsbohrungen (220) der Grundplatte hindurchgehen, wobei das eine oder die mehreren Fundamentelemente (240) aus vorgefertigtem Beton bestehen, wodurch eine Installation des Paketschließfachs (220) an Ort und Stelle ermöglicht wird.

2. Paketfach (200) nach Anspruch 1, wobei das Befestigungsmittel zwei Teile umfassen kann, die ineinandergreifen, um die Grundplatte am Fundament zu befestigen.

3. Paketfach (200) nach Anspruch 2, wobei die beiden Teile Schrauben und Bolzen, Nietverbindungen oder vergleichbare Mittel umfassen.

4. Paketfach (200) nach einem der vorhergehenden Ansprüche, wobei das Kommunikationsmittel (202) des Paketfachs Bluetooth oder Nahfeldkommunikation (NFC) oder andere Standards für WPAN mit den gleichen Eigenschaften wie Bluetooth oder Nahfeldkommunikation ist, nämlich geringer Stromverbrauch und begrenzte Kommunikationsreichweite.

5. Paketfach (200) nach einem der vorhergehenden Ansprüche, wobei die Batterie (216) aus Superkondensator, wiederaufladbaren Batterien, LI-ION-Batteriepack oder vergleichbaren Einheiten ausgewählt wird.

6. Paketfach (200) nach Anspruch 5, wobei das LI-ION-Batteriepack eine Spannung von 7,2 V mit einer Kapazität von 19000 mAh aufweist.

7. Paketfach (200) nach einem der vorhergehenden Ansprüche, wobei das Paketfach (200) während der Benutzung ohne festverdrahtete Stromversorgung ist.

8. Paketfach (200) nach einem der vorhergehenden Ansprüche, wobei ein elektrischer Schalter das mechanische Schloss (274) steuert.

9. Paketfach (200) nach einem der vorhergehenden Ansprüche, wobei
- das Fundamentelement (240) mit einer oberen Fläche (242), einer unteren Fläche (244) und einem oder mehreren Fundamentdurchgangslöchern (246) von der oberen Fläche (242) zur unteren Fläche (244) konfiguriert ist;
- ein Bodenverankerungsmittel (250) mit einem Kopf (252) und einer Spitze (253), wobei das Bodenverankerungsmittel (250) angepasst ist, um in den Boden montiert zu werden, indem das Bodenverankerungsmittel (250) durch eines der einen oder mehreren Fundamentdurchgangsbohrungen (246) angeordnet wird, wobei die Spitze (253) in den Boden geht.

10. Paketfach (200) nach einem der vorhergehenden Ansprüche, wobei
- das Prozessormittel (206) des Paketfachs und das Kommunikationsmittel (202) des Paketfachs angepasst sind, um Handlungen des Übertragens (102), Empfangens (106) und Erzeugens (108) durchzuführen,
wobei die Handlungen des Übertragens (102), Empfangens (106) und Erzeugens (108) beinhalten
- Übertragen (102) von Bakensignalen (22), die eine Servicepunkt-ID (24) umfassen;
- Empfangen (106) eines elektronischen Benutzer-Tokens (50), der mit einer übereinstimmenden Servicepunkt-ID (24) gekennzeichnet ist, die eine Stück-ID (42) und Anweisungen (52) eines Benutzerereignisses (54) umfasst;
- Erzeugen (104) eines Paketfach-Befehls (270) für die empfangenen Anweisungen (52); und
- Übertragen (102) eines Paketfach-Befehlssignals (272) für den Paketfach-Befehl (260) zur Bedienung des Schlosses (274),
wobei der elektronische Benutzer-Token (50) unter Verwendung eines Kommunikationsstandards eines drahtlosen persönlichen Bereichsnetzes (414) empfangen wird, und
wobei das Prozessormittel (206) des Paketfachs und das Kommunikationsmittel (202) des Paketfachs angepasst sind, um ferner folgende Handlungen durchzuführen;
- Erzeugen (108) einer Folgenummer (58) für die Anweisung (52) des Benutzerereignisses (54);
- Erzeugen (108) eines elektronischen Synchronisations-Tokens (60), der die Folgenummer (58) und die Stück-ID (42) umfasst;
- Übertragen (102) des elektronischen Synchronisations-Tokens (60), und
- Empfangen eines elektronischen Bestätigungs-Tokens (70).

11. Verwendung eines Paketfachs (200) nach einem der vorhergehenden Ansprüche 1-10 für eine Place-and-Play-Installation.

12. Verwendung eines Paketfachs (200) nach Anspruch 11 für eine Installation ohne fest verdrahtete Stromversorgung.

## Revendications

1. Casier pour colis (200) comprenant :
- un châssis de casier pour colis (210), comprenant un cadre externe (217), conçu avec une plaque de base (218) sur laquelle repose le casier pour colis (200), la plaque de base (218) étant conçue avec un ou plusieurs trous traversants de plaque de base (220) ;
- des compartiments (212), chaque compartiment (212) ayant au moins une porte (214) dotée d'un verrou mécanique (274) pour venir en prise avec le châssis de casier pour colis (210) ;
- un moyen de traitement de casier pour colis (206) et un moyen de communication de casier pour colis (202),
- une batterie (216) et le casier pour colis (200) sont conçus pour fonctionner sur batterie ;
**caractérisé en ce que** le casier pour colis (200) comprend
- un ou plusieurs éléments de fondation (240), dans lequel le casier pour colis (200) est ancré aux un ou plusieurs éléments de fondation (240) par un moyen de fixation traversant les un ou plusieurs trous traversants de plaque de base (220), dans lequel les un ou plusieurs éléments de fondation (240) sont en béton préfabriqué, permettant ainsi une installation de type place-and-play du casier pour colis (220).

2. Casier pour colis (200) selon la revendication 1, dans lequel le moyen de fixation peut comprendre deux parties qui s'emboîtent pour fixer la plaque de base à la fondation.

3. Casier pour colis (200) selon la revendication 2, dans lequel les deux parties comprennent une vis et un boulon, des joints rivetés ou un moyen comparable.

4. Casier pour colis (200) selon l'une quelconque des revendications précédentes, dans lequel le moyen de communication (202) de casier pour colis est la communication Bluetooth ou en champ proche(NFC) ou d'autres normes pour WPAN avec les mêmes caractéristiques de faible consommation d'énergie et de portée de communication limitée que la communication Bluetooth ou en champ proche.

5. Casier pour colis (200) selon l'une quelconque des revendications précédentes, dans lequel la batterie (216) est choisie parmi un supercondensateur, des batteries rechargeables, un bloc-batterie LI-ION ou des unités comparables.

6. Casier pour colis (200) selon la revendication 5, dans lequel le bloc-batterie LI-ION a une tension de 7,2 V avec une capacité de 19 000 mAh.

7. Casier pour colis (200) selon l'une quelconque des revendications précédentes, dans lequel le casier pour colis (200) est dépourvu d'alimentation électrique câblée pendant son utilisation.

8. Casier pour colis (200) selon l'une quelconque des revendications précédentes, dans lequel un commutateur électrique commande le verrou mécanique (274).

9. Casier pour colis (200) selon l'une quelconque des revendications précédentes, dans lequel
- l'élément de fondation (240) est conçu avec une surface supérieure (242), une surface inférieure (244) et un ou plusieurs trous traversant de fondation (246) depuis la surface supérieure (242) à la surface inférieure (244) ;
- un moyen d'ancrage au sol (250) doté d'une tête (252) et d'une pointe (253), dans lequel le moyen d'ancrage au sol (250) est conçu pour être monté dans le sol en agençant le moyen d'ancrage au sol (250) à travers l'un des un ou plusieurs trous traversants de fondation (246) avec la pointe (253) pénétrant dans le sol.

10. Casier pour colis (200) selon l'une quelconque des revendications précédentes, dans lequel
- le moyen de traitement de casier pour colis (206) et le moyen de communication de casier pour colis (202) sont adaptés pour exécuter des actions de transmission (102), de réception (106) et de génération (108),
dans lequel les actions de transmission (102), de réception (106) et de génération (108) comportent
- la transmission (102) de signaux de balise (22) comprenant un ID de point de service (24) ;
- la réception (106) d'un jeton électronique d'utilisateur (50) étiqueté avec un ID de point de service correspondant (24) comprenant un ID de pièce (42) et une instruction (52) d'un événement utilisateur (54) ;
- la création (104) d'une commande de casier pour colis (270) pour les instructions reçues (52) ; et
- la transmission (102) d'un signal de commande de casier pour colis (272) pour la commande de casier pour colis (260) pour faire fonctionner le verrou (274),
dans lequel le jeton électronique utilisateur (50) est reçu à l'aide d'une norme de communication d'un réseau personnel sans fil (414), et
dans lequel ledit moyen de traitement de casier pour colis (206) et le moyen de communication de casier pour colis (202) sont adaptés pour exécuter d'autres actions de ;
- génération (108) d'un numéro de séquence (58) pour l'instruction (52) de l'événement utilisateur (54) ;
- génération (108) d'un jeton électronique de synchronisation (60), comprenant le numéro de séquence (58) et l'ID de pièce (42) ;
- transmission (102) du jeton électronique de synchronisation (60), et
- réception d'un jeton électronique d'accusé de réception (70).

11. Utilisation d'un casier pour colis (200) selon l'une quelconque des revendications précédentes 1 à 10 pour une installation de type place-and-play.

12. Utilisation d'un casier pour colis (200) selon la revendication 11 pour une installation sans alimentation électrique câblée.
